# EUROPEAN PATENT APPLICATION

(11) **EP 4 592 892 A1**
(43) Date of publication of application: **30.07.2025**
(21) Application number: 25153074.7
(22) Date of filing: 21.01.2025
(51) Int. Cl.: G06K 19/077

(54) **METALLIC CORE ELEMENT, CHIP CARD BODY, AND METHOD FOR PRODUCING A CHIP CARD**

(30) Priority: 23.01.2024 US 202463624053 P
(71) Applicant: Giesecke+Devrient ePayments America, Inc., Dulles, VA 20166 (US)
(72) Inventor: Cameron Jr., James H., Dulles, 20166 (US)
(74) Representative: LKGLOBAL Lorenz & Kopf Patentanwalt Attorney at Law PartG mbB

(57) **Abstract**

A flat metallic core element for a card body of a chip card, a chip card body for a chip card, a chip card, and a method for manufacturing a chip card, in particular a transaction card having a chip module enabling electronic transactions, are provided. The chip card comprises a flat metallic core element having a mounting area for mounting the chip module to the metallic core element, and at least one plastic layer at least partially covering the metallic core element and having a receiving opening providing access to the mounting area and configured for receiving the chip module; wherein the mounting area is at least partly provided with an ablation zone providing a surface roughening for improving a bond between the mounting area and the chip module when the chip module is mounted to the metallic core element; and wherein the receiving opening surrounds the ablation zone.

## Description

### Technical Field

The present disclosure relates to the field of manufacturing chip cards or other portable data carriers comprising a card body carrying an electronic chip module. In particular, the present disclosure relates to a metallic core element for a card body of a chip card, in particular a transaction card having a chip module enabling electronic transactions, to a card body for a chip card, in particular a transaction card having a chip module enabling electronic transactions, and to a method for manufacturing a chip card, in particular a transaction card having a chip module enabling electronic transactions.

### Background of the Invention

Chip cards, also known as portable data carriers, are known from the state of the art and can be used, for example, for cashless payment of goods or services, for personal identification and/or for access to Internet-based application programs. Accordingly, there are, for example, card-shaped data carriers in the form of chip cards in general, payment cards, such as credit cards or debit cards, as well as ID cards or identity cards. Such chip cards usually have a card body carrying a chip module comprising an electronic circuit with an electronic component, such as an integrated chip, which can be accessed in order to read data from it and, based on this, allow a legitimate owner of the data carrier to perform and/or authorize a specific action, such as a transaction, in particular a financial transaction.

US 2023/409861 A1, for example, relates to a method for producing a card body for a chip card, includes the steps of: providing a flat card body having a metallic core, wherein the metallic core is covered at least partly with a plastic layer at least on a main area and wherein the metallic core has a slit running from an outer edge of the main area into this main area; and incorporating a cavity having a bottom area for receiving a chip module into the plastic layer in such a way that the cavity covers the slit at least partly and that at least along the slit an excess material remains with respect to the bottom area.

WO 2021/097208 A1 describes transaction card for dual interface communication of a transaction includes a card body, a chip opening, a discontinuity, and a transponder chip. The card body includes a first metal layer having an outer peripheral edge, a first metal face, and a second metal face. The chip opening includes a first chip hole transversely extending from the first metal face toward the second metal face thereby defining a first metal edge surrounding a predetermined hole shape. The discontinuity extends from the outer peripheral edge to the first metal edge. The transponder chip module has a module antenna and is configured to be received within the chip opening. The module antenna defines an outer antenna edge surrounding a predetermined antenna shape such that the predetermined antenna shape is the same as the predetermined hole shape for improved inductive coupling via the discontinuity during use.

US 10,762,412 B2 A relates to a transaction card having a metal layer, an opening in the metal layer for a transponder chip, and at least one discontinuity extending from an origin on the card periphery to a terminus in the opening. The card has a greater flex resistance than a card having a comparative discontinuity with the terminus and the origin the same distance from a line defined by a first long side of the card periphery in an absence of one or more strengthening features. Strengthening features include a discontinuity wherein one of the terminus or the origin are located relatively closer to the first long side of the card periphery than the other, a plurality of discontinuities wherein fewer than all extend from the card periphery to the opening, a self-supporting, non-metal layer disposed on at least one surface of the card, or one or more ceramic reinforcing tabs surrounding the opening.

EP 4 264 488 A1 relates to a method for producing a card body for a chip card, having the steps of: - providing a metal main part with two main surfaces lying opposite each other and a peripheral surface which connects the two main surfaces, wherein a module opening for receiving a chip module is already produced in the main part or is to be produced in a module opening zone, and - producing a slot on the peripheral surface between the two main surfaces, wherein the slot is formed from the peripheral surface to the module opening or to the module opening zone, and an insert angle of the slot in at least one of the two main surfaces is an unequal to 90° relative to the main surface.

EP 2 817 768 B1 refers to a method for producing an electronic module having a contact device and comprising the following steps: A carrier layer and at least one electrically conductive layer are made available. The at least one electrically conductive layer is applied to the carrier layer by lamination, using a lamination sheet or the like to form the contact device of the module. The lamination sheet has at least one recess into which the electrically conductive layer is pressed during lamination, thereby forming at least one raised portion in the electrically conductive layer such that the contact device and the electrical component of the data carrier base can be contacted via the at least one raised portion when the module is embedded into the data carrier base.

Chip cards, for example, transaction cards, according to the prior art, as described above, may not fully satisfy all requirements regarding their mechanical stability. If exposed to certain mechanical impacts, in particular re-occurring bending and pressure applied to the chip card, the mechanical as well as possibly an electric connection between the chip module and the card body may not last as long as desired. For example, a typical or standard use period of a chip card configured as a transaction card is 3 to 8 years, the end of which may not be reached if the connection between the chip module and the card body or the card body itself is damaged due to everyday use in such a way that it renders the chip card dysfunctional at least in part.

### Summary of the Invention

It may thus be seen as an object to provide chip cards which can be used until the end of their respective standard use period and preferably beyond. In particular, it may be seen as an object to improve a mechanical and/or electrical connection between the chip module and the card body. These objects are at least partly achieved by the subject-matter of the independent claims.

According to an aspect, a flat metallic core element for a chip card body of a chip card, in particular a transaction card having a chip module enabling electronic transactions is provided, the metallic core element having a mounting area for mounting the chip module to the metallic core element, wherein the mounting area is at least partly provided with an ablation zone providing a surface roughening for improving a bond between the mounting area and the chip module when the chip module is mounted to the metallic core element.

According to an aspect, a chip card body for a chip card, in particular a transaction card having a chip module enabling electronic transactions is provided, comprising a flat metallic core element having a mounting area for mounting the chip module to the metallic core element, and at least one plastic layer at least partially covering the metallic core element and having a receiving opening providing access to the mounting area and configured for receiving the chip module; wherein the mounting area is at least partly provided with an ablation zone providing a surface roughening for improving a bond between the mounting area and the chip module when the chip module is mounted to the metallic core element; and wherein the receiving opening surrounds the ablation zone.

According to an aspect, a method for manufacturing a chip card, in particular a transaction card having a chip module enabling electronic transactions, is provided, comprising the steps of: providing a flat a metallic core element having a mounting area for mounting the chip module to the metallic core element; covering the metallic core element at least partly with at least one plastic layer having a receiving opening configured for receiving the chip module and surrounding the mounting area; and bonding the chip module to an ablation zone providing a surface roughening in the mounting area for improving a bond between the mounting area and the chip module when the chip module is mounted to the metallic core element.

The proposed solution has the advantage over the prior art, that the surface roughening creates peaks and valleys in the metal surface of the metallic core element, enhancing a connection between the mounting area and any material that is used for mounting the chip module to the metallic core element. For example, as such a material, an adhesive, such as glue and/or solder can be used. The material can flow and adhere to the surface roughening, thus creating an improved bond. This helps in increasing the overall mechanic and/or electric stability of the chip card and hence, its use period. Providing the surface roughening as an ablation has the advantage that the roughening can be provided at any time during the manufacturing process of the chip card and can be formed and shaped according to respective requirements to the mounting area.

Further developments can be derived from the dependent claims and from the following description. Features described with reference to a chip card and components thereof may be implemented as method steps, or vice versa. Therefore, the description provided in the context of the chip card and its components applies in an analogous manner also to respective methods. In particular, features and functions of the chip card and of its components may be implemented as method steps of the methods and the method steps may be implemented as respective features or functions, respectively.

According to a possible embodiment of the metallic core element, the surface roughening is provided as a ribbing. The ribbing can offer a well-defined structure. Furthermore, the ribbing may be relatively easily manufacturable in a homogeneous manner. Hence, the ribbing helps in providing reliable and reproducible surface roughening. The ribs constituting the ribbing further promote a controlled flow of any material used for bonding the chip module to the metallic core element along grooves formed between the ribs.

Thereby, the material may be evenly distributed between the chip module and the mounting area in a controlled manner without flowing over beyond the mounting area or not covering the mounting area in the required manner.

According to a possible embodiment of the metallic core element, the ribbing extends essentially diagonally with respect to a transverse direction of the metallic core element. In other words, the ribbing can extend under a certain angle with respect to a longitudinal extension of the metallic core element. This can help in compensating for mechanical stresses acting on the bond between the chip module and the metallic core element, in particular if those mechanical stresses are caused by bending the metallic core element around a longitudinal axis and/or transverse axis thereof.

According to a possible embodiment of the metallic core element, a slit is formed in the metallic core element such that the slit extends from an upper side to a lower side of the metallic core element and runs through the mounting area. The slit allows radio frequency waves to pass from one side of the chip card to the other side, e.g., through the face of the chip card to and its rear, because in the region of the silt, there is no electrically-conducting metal barrier interfering with the wave propagation.

According to a possible embodiment of the metallic core element, the slit ends in an installation opening formed in the mounting area for receiving at least one electric connector for establishing an electrical connection to the chip module. Consequently, the slit can help to let radio waves enter an installation space within the card body for installing the chip module which is supposed to pick up the radio waves. Thereby, the slit can further enhance radio reception of the chip module, or any antenna element attached thereto, possibly at least partially extending within or through the installation opening.

According to a possible embodiment of the metallic core element, the slit extends through the mounting area on two sides of the installation opening. With other words, the slit may cross the installation opening, or may be continued through the installation opening, such that it extends away from the installation opening at two sides thereof. This further help in letting radio waves pass from one side of the chip card to the other side and/or to enter the installation space within the card body.

According to a possible embodiment of the metallic core element, at least in the ablation zone, the slit extends essentially in parallel to a longitudinal direction of the metallic core element. Thereby, the slit helps in providing structural flexibility in a controlled manner, in particular if bending forces are applied to the card body around the longitudinal direction. This helps in further improving mechanical and/or electrical stability of the chip card.

According to a possible embodiment of the metallic core element, at least sectionwise, the ablation zone is distanced from the slit. With other words, a border zone without surface roughening maybe provided around the slit, extending through the ablation zone. Thereby, it may be prevented, that any material for bonding the chip module to the metallic core element enters and thereby closes the slit, which may lead to unwanted structural effects as well as it may impede the propagation of radio waves through the slit.

According to a possible embodiment of the metallic core element, the slit has an outer end section ending at an outer edge of the metallic core element and extending essentially perpendicular to the outer edge. This helps in adding structural stability to the chip card. Thereby, the use period of the chip card can be extended.

According to a possible embodiment of the metallic core element, a first curve section of the connects to the outer end section and has a first curvature radius. This again helps in adding further structural stability to the chip card. Thereby, the use period of the chip card can be further extended.

According to a possible embodiment of the metallic core element, a second curve section of the slit has a second curvature radius bigger than the first curvature radius. This also helps in adding further structural stability to the chip card. Thereby, the use period of the chip card can be additionally extended.

According to a possible embodiment of the metallic core element, a middle section of the slit extends between the first curve section and the second curve section. This also helps in adding structural stability to the chip card. Thereby, the use period of the chip card can be additionally extended.

According to a possible embodiment of the metallic core element, a middle section of the slit extends between the first curve section and the second curve section. This helps in extending the slit. This further help in letting radio waves pass from one side of the chip card to the other side.

According to a possible embodiment of the metallic core element, the middle section extends essentially in parallel to the outer edge of the metallic core element. Thereby, the slit helps in providing structural flexibility in a controlled manner, in particular if bending forces are applied to the card body around the middle section. This helps in further improving mechanical and/or electrical stability of the chip card.

According to a possible embodiment of the card body, the receiving opening has at least one rounded corner section with a corner radius which is smaller than a radius of an installation opening of the metallic core element, preferably less than 2.25 mm. With other words, the receiving opening maybe shaped differently to the installation opening. For example, the installation opening may be essentially round or at least elliptic, by the receiving opening may have a TV screen like shape having the respective corner radius. The addition of a minimum radius of, e.g., around or less than 2.25 mm, to each side of the installation opening allows the application of an ablation pattern while minimizing the risk of damaging the plastic layers that surround the installation opening.

According to a possible embodiment of the card body, at least in the region of the rounded corner section, a distance between the ablation zone and an inner perimeter of the receiving opening is provided. Thereby, safety margin around the ablation zone is provided. This further facilitates the application of an ablation pattern while minimizing the risk of damaging the plastic layers that surround the installation opening.

According to a possible embodiment of the card body, a chip module is received in the receiving opening and mounted to the mounting area by at least being bonded to the ablation zone. In particular, the chip module can be bonded exclusively to the ablation zone. Thereby, an enhanced well-defined connection between the mounting area and any material that is used for mounting the chip module to the metallic core element is provided. This helps in increasing the overall mechanic and/or electric stability of the chip card and hence, its use period.

According to a possible embodiment of the card body, the chip module is glued at least to the ablation zone. Gluing by itself is an efficient way of mounting the chip module to the card body. The ablation zone helps in enhancing the adhesive connection between the chip module and the card body. This helps in further increasing the overall mechanic and/or electric stability of the chip card and hence, its use period.

According to a possible embodiment of method for manufacturing a chip card, method further comprises the step of forming the ablation zone through the receiving opening, preferably by means of laser ablation. Thereby, the ablation zone can be arranged and/or shaped according to an individual position of the receiving opening with respect to the metallic core element. This helps in additionally increasing the overall mechanic and/or electric stability of the chip card and hence, its use period.

### Brief Description of the Drawings

- Fig. 1: is a schematic top view of a chip card comprising a card body and a chip module.
- Fig. 2: is a schematic top view of the chip card illustrated in Fig. 1 before the chip module is mounted to the card body.
- Fig. 3: is a schematic detail II of the chip card illustrated in Fig. 2.
- Fig. 4: is a schematic cross-sectional view of the chip card shown in Fig. 3 along a cross-sectional line A-A depicted therein.
- Fig. 5: is a schematic top view of a mounting area of the chip card shown in Fig. 4 provided with an ablation zone.
- Fig. 6: is a schematic cross-sectional view of the chip card along the cross-sectional line A-A depicted therein with the chip module mounted to the mounting area.
- Fig. 7: is a schematic top view of a metal sheet comprising a number of metallic core elements for the chip card shown in Figs. 1 to 6.
- Fig. 8: is a schematic flow diagram of steps of a method for manufacturing a chip card shown in Figs. 1 to 6.

### Detailed Description of Embodiments

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

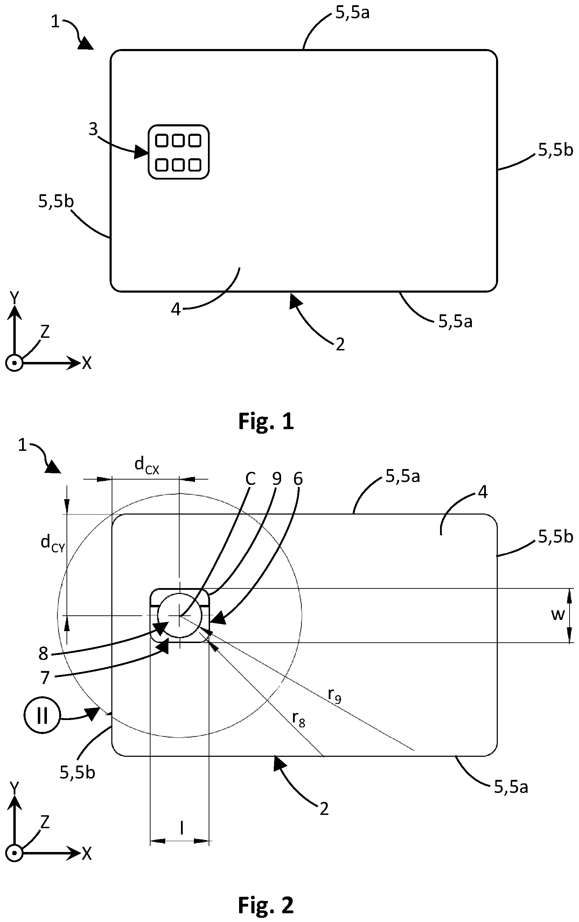

Fig. 1 shows a schematic top view of a chip card 1 comprising a card body 2 and a chip module 3. The chip card 1 extends in a longitudinal direction X, a transverse direction Y, and a height direction Z, together forming a Cartesian coordinate system. A top face 4 of the chip card 1 faces in the height direction Z. Lateral side faces 6 of the chip card 1, namely, longitudinal side faces 5a and transverse side faces 5b, extent essentially in parallel to the longitudinal direction X and the transverse direction Y, respectively.

Fig. 2 shows a schematic top view of the chip card 1 illustrated in Fig. 1 before the chip module 3 is mounted to the card body 2. The chip module 3 is supposed to be received in a cavity 6 formed in the card body 2. The cavity 6 comprises a receiving opening 7 and installation opening 8 arranged concentrically around a center point C of the cavity 6. The point C is arranged at a longitudinal distance dₓ to the nearest transverse side face 5b and at a lateral distance d_{y} to the nearest longitudinal side face 5a.

The receiving opening 7 has an essentially rectangular or TV screen shape in a projection against the height direction Z and is provided with rounded corners 9 having with a radius r₉ of around 2.2 mm. A length l of the receiving opening 7 measured in parallel to the longitudinal axis X amounts to around 13.15 mm, while a width w of the receiving opening 7 measured in parallel to the transverse axis Y amounts to around 11.95 mm. The installation opening 8 has an essentially round or elliptical shape in a projection against the height direction Z with a radius r₈ of around 4.9 mm.

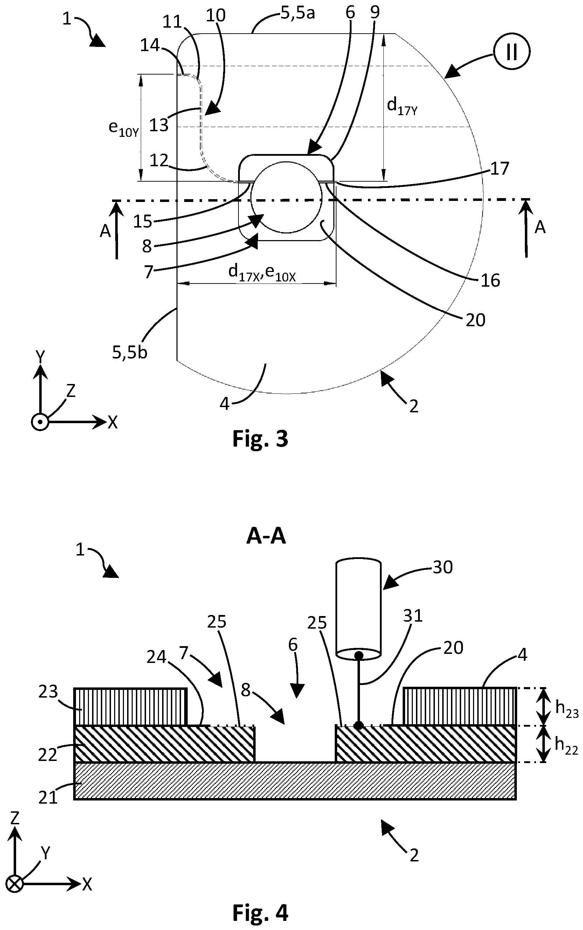

Fig. 3 shows a schematic detail II of the chip card 1 illustrated in Fig. 2. Here it becomes apparent that a slit 10 is formed in a metal core element (see Fig. 4) of the chip card 1. The slit 10 has a first curve section 11 and a middle section 13 arranged therebetween. The first curve section 11 has radius r₁₁ which is smaller than a radius r₁₂ of the second curve section 12 and is connected to an outer end section 14 of the slit 10 ending in one of the lateral side faces 5, in particular the transfers side face 5b.

The second curve section 12 is connected to an inner end section 15 of the slit 10 in the cavity 6. An extension section 16 is arranged in the cavity 6 on a side of the installation opening 8 opposing the side of the installation opening 8 where the inner end section 15 is arranged. In other words, the slit 10 virtually crosses the extension opening 8 such that the inner end section 15 is continued as the extension section 16, whereby the slit 10 extends on two sides of the installation opening 8. The inner end section 15 is aligned with the extension section 16. Both, the inner end section 15, and the extension section 16 extend in parallel to the longitudinal direction X, and hence to the longitudinal side face 5a as well as respective longitudinal edges of the cavity 6, in particular of the parts of the cavity 6 defined by the receiving opening 7.

A terminal point 17 of slit 10, in particular of the section 17, is located beyond the transverse edge of the receiving opening 7 and hence of the cavity 6. Thereby, a longitudinal distance d_{17X} of the terminal point 17 measured in parallel to the longitudinal direction X from the transverse side face 5b exceeds the longitudinal distance of the transverse edge of the receiving opening 7. In other words, the longitudinal distance d_{17X} of the terminal point 17 from the transfers side face 5b is larger than the longitudinal distance dcx of the center point C from that transverse side face 5b plus half the width w of the cavity 6.

An overall longitudinal extension e_{10X} of the slit 10, measured from where the outer end section 14 of the slit 10 ends in the transverse side face 5b is consequently larger than a longitudinal distance of the cavity 6, in particular the receiving opening 7, from that transverse side face 5b plus the width w of the cavity 6, in particular the receiving opening 7. A transverse distance d_{17X} of the terminal point 17 measured in parallel to the transverse direction Y from the longitudinal side face 5a is chosen such that it is smaller than the transverse distance d_{CY} of the center point C from the longitudinal side face 5a. Thereby, the slit 10, in particular the inner end section 17 and the extension section 16 thereof, are arranged in an upper half of the cavity 6. An overall transverse extension e_{10Y} of the slit 10, measured in parallel to the transverse direction Y between the outer end section 14 and the extension section 16 of the slit 10 is smaller than the transverse distance d_{17X} of the terminal point 17.

Furthermore, it becomes apparent in Fig. 3 that a mounting area 20 is provided in the cavity 6 for mounting the chip module 3 to the card body 2. The mounting area 20 is provided in form of a ledge within the cavity 6 in that the installation opening 8 is smaller than the receiving opening 7. The slit 10, in particular the inner end section 15 and the extension section 16 thereof, crosses or cross, respectively, the entire mounting area 20. The slit 10 and the cavity 6 are covered from below by a plastic layer provided by a plastic bottom element 21, while the slit 10 is formed in and extends from an upper side to a lower side of a metallic core element 22 which provides the installation opening 8 and is covered by another plastic layer in the form of a plastic top element 23 of the card body 2 (see Fig. 4). As depicted in Fig. 3, the first curve section 11, the second curve section 12, the middle section 13 and the outer end section 14 as well as the terminal point 17 of the slit 10 are covered up by the plastic top element 23, while the inner end section 15 and the extension section 16 lie essentially bare within the cavity 6.

Fig. 4 shows a schematic cross-sectional view of the chip card 1 shown in Fig. 3 along a cross-sectional line A-A depicted therein. Here it becomes apparent that the card body 2 usually takes the form of a flat base body provided by the plastic bottom element 21. The metallic core element 22 and the plastic top element 23 providing the top face 4. For example, plastic bottom element 21 and the plastic top element 23 can be made of thermoplastic material, such as PC, PVC, PET, PETG and/or ABS. A height h₂₂ of the metallic core element 22 measured in parallel to the height direction Z can amount to around 0.66 mm. A height h₂₃ of the plastic top element 23 measured in parallel to the height direction Z can amount to around 0.22 mm, whereby respective depth of the cavity 6 measured in parallel to the height direction Z amounts to around 0.88 mm as a sum of the height h₂₂ of the metallic core element 22 and the height h₂₃ of the plastic top element 23, since the installation opening 8 formed in the metal core element 22 and the receiving opening 7 formed in the plastic top element 23 together define the cavity 6.

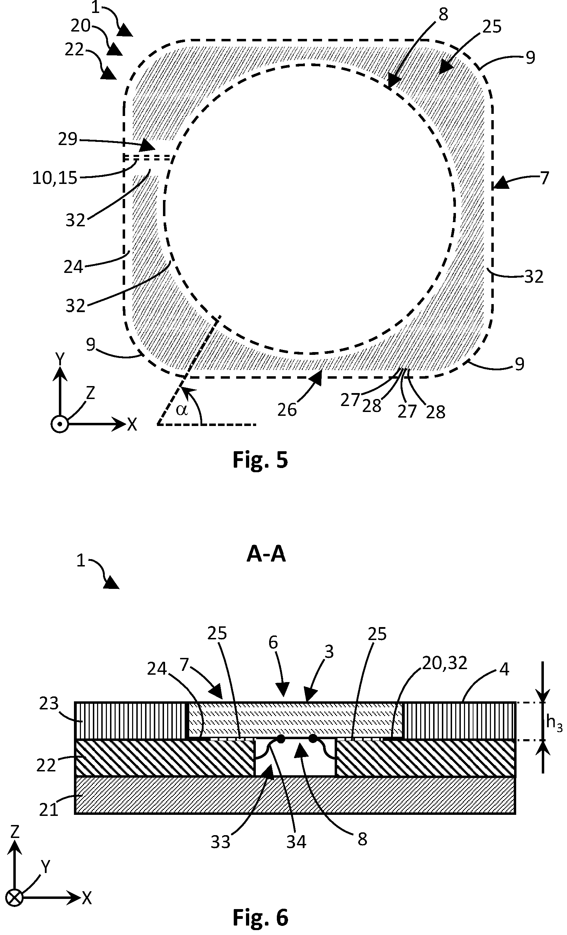

The mounting area 20 is provided on a surface 24 of the metallic core element 22, in particular a top surface thereof. An ablation zone 25 is formed in the mounting area 20 on the surface 24. The ablation zone 25 can comprise a ribbing 26 consisting of peaks 27 and valleys 28 and can be formed such that a channel 29 is provided through which the slit 10, in particular the inner end section 15 thereof, crosses the ablation zone 25 (see Fig. 5). For forming the ablation zone 25, an ablation device 30 for applying an ablation tool 31 can be used. In the present example, a laser device is used as the ablation device 30, emitting a laser beam used as the ablation tool 31.

Fig. 5 shows a schematic top view of the mounting area 20 of the chip card shown in Fig. 4 provided with the ablation zone 25. Here it becomes apparent, that the ribbing 26 is arranged at an angle α with respect to the longitudinal direction X of approximately 60° and is therefore extending essentially diagonally through the mounting area 20. Alternative angles α between the ribbing 26 and the longitudinal direction X may be chosen, for example, between 20 and 70°, between 30 and 60°, and/or around 45°. The ribbing 26 provides the peaks 27 and valleys 28 arranged next to each other. Any material, such as an adhesive (not shown), used for mounting the chip module 3 to the mounting area 20 may displaced within the valleys 28 such that the chip module 3 may abut the peaks 27 while avoiding that the material oozes out from between the chip module 3 and the mounting area 20, while at the same time the enlarged surface provided by the ribbing 26 enabled a particularly strong bond between the material and the metal core element 22.

Furthermore, it becomes apparent in Fig. 5, that the channel 29 formed in the ablation zone 25 is provided as an omission of the ribbing 26. A border region 32 is thereby formed between the ablation zone 25 and the slit 10, in particular the inner end section 15 thereof, in the region of the channel 29. Similarly, the border region 32, were no ribbing 26 is applied, is arranged circumferentially around the installation opening 8 between the installation opening 8 and the ablation zone 25. The border region 32 is also applied peripherally around the ablation zone 25 between the ablation zone 25 and the receiving opening 7. Here, the rounded edges 9 of the receiving opening 9 help in shaping the ablation zone 25 such that it covers an area as a part of the mounting zone 20 which is well sufficient for mounting the chip module 3 to the metal core element 22.

Fig. 6 is a schematic cross-sectional view of the chip card 1 along the line cross-sectional line A-A with the chip module 3 mounted to the mounting area 20. The chip module 3 sets within the cavity 6, in particular the parts thereof provided by the receiving opening 7 and is bonded to the ablation zone 20 by means of a respective material (not shown). The chip module 3 rests on the metallic core element 22 and lies flush with the surface 24 thereof. A height h₃ of the chip module 3 essentially equals the height h₂₃ of the plastic top element 23. Consequently, a top surface of the chip module 3 is essentially aligned with the top face 4 of the chip card 1 provided by the plastic top element 23. Below the chip module 8, a closed installation space 33 is formed within the installation opening 8 which is covered up by the chip module 3. Within the installation space 33, electric connectors 34, such as electrically conductive lines, can be arranged, for example for contacting respective electrical contacts of the chip module 3 from below. The electric connectors 34 may, e.g., be provided for connection to and/or at least partly used as an electrical coil for allowing wireless data transmission between the chip module 3 and a transceiver device (not shown) via respective radio waves which may pass through the metallic core element 22 through and/or via the slit 10.

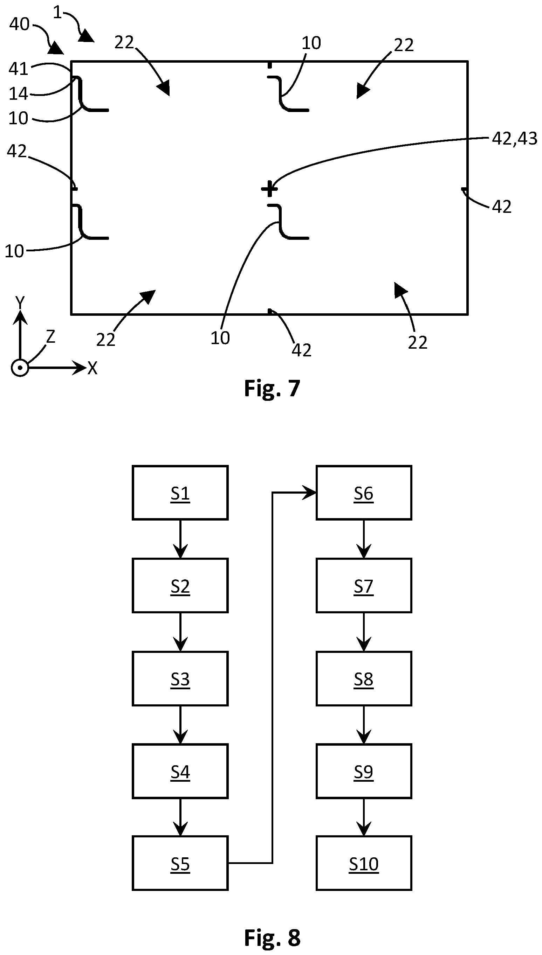

Fig. 7 shows a schematic top view of a metal sheet 40 comprising a number of metallic core elements 22 for the chip card 1 shown in Figs. 1 to 6. Slits 10 for several metallic core elements 22 maybe already formed in the metal sheet 40. Some of the slits 10, in particular the outer end sections 14 thereof, may be formed such that they end at an outer edge 41 of the metal sheet 41 which will constitute the outer edge 41 of the metallic core element 22 situated in the region of the respective transfers side face 5b of the chip card 1. For separating the metal core elements 22 from each other, the metal sheet 40 may be provided with crop marks 42 and/or reference marks 43. Some of the crop marks 42 may constitute a reference mark 43 and vice versa.

Fig. 8 shows a schematic flow diagram of exemplary steps S of a method for manufacturing a chip card shown in Figs. 1 to 6, where the art of the steps S may be chosen and/or altered as required. For example, in a first step S1, the metal sheet 40 may be provided. In a step S2, the crop marks 42 and/or reference marks 43 may be applied to the metal sheet 40. In a step S3, the split 10 may be formed in the metal sheet 40. In a step 4, the metal core elements 22 maybe separated from each other, i.e., singularized. In a step S5, the installation openings 8 may be provided to the metal core elements 22.

In a step S6, the plastic bottom elements 21 may be joined with the metal core elements 22. In a step S7, the plastic top elements 23 may be joined with the medical elements 22. In a step S8, the receiving opening 7 may be formed. In a step S9, the ablation zone 25 may be formed. In a step S10, the chip module 3 may be joined with the card body 2 by mounting the chip module 3 to the mounting area 20, for example, by gluing the bottom side of the chip module 3 to the ablation zone 25, while electrically connecting the chip module 3 to the electric connectors 34.

### List of Reference Signs

- 1: chip card
- 2: card body
- 3: chip module
- 4: top face
- 5: lateral side face
- 5a: longitudinal side face
- 5b: transverse side face
- 6: cavity
- 7: receiving opening
- 8: installation opening
- 9: rounded corner
- 10: slit
- 11: first curve section
- 12: second curve section
- 13: middle section
- 14: outer end section
- 15: inner end section
- 16: extension section
- 17: terminal point

- 20: mounting area
- 21: plastic bottom element
- 22: metallic core element
- 23: plastic top element
- 24: surface
- 25: ablation zone
- 26: ribbing
- 27: peak
- 28: valley
- 29: channel

- 30: ablation device
- 31: ablation tool/ laser
- 32: border region
- 33: installation space
- 34: electric connector

- 40: metal sheet
- 41: outer edge
- 42: crop mark
- 42: reference mark

- dcx: longitudinal distance of center point
- d_{CY}: transverse distance of center point
- d_{17X}: longitudinal distance of slit end
- d_{17Y}: transverse distance of slit end
- e_{10X}: longitudinal extension of slit
- e_{10Y}: transverse extension of slit
- h₂₂: height of metal core element
- h₂₃: height of plastic top element
- h₃: height of chip module
- l: length of cavity
- r₇: receiving opening radius
- r₉: rounded corner radius
- w: width of cavity

- X: longitudinal direction
- Y: transverse direction
- Z: height direction
- α: angle

- S 1: provide metal sheet
- S2: apply marks
- S3: form slit
- S4: singularize core elements
- S5: provide installation openings
- S6: apply plastic bottom
- S7: apply plastic top
- S8: form receiving opening
- S9: form ablation zone
- S10: mount chip module

### ASPECTS

1. A flat metallic core element for a card body of a chip card, in particular a transaction card having a chip module enabling electronic transactions,
   the metallic core element having a mounting area for mounting the chip module to the metallic core element,
   wherein the mounting area is at least partly provided with an ablation zone providing a surface roughening for improving a bond between the mounting area and the chip module when the chip module is mounted to the metallic core element.
2. The metallic core element according to aspect 1, wherein the surface roughening is provided as a ribbing.
3. The metallic core element according to aspect 2, wherein the ribbing extends essentially diagonally with respect to a transverse direction of the metallic core element.
4. The metallic core element according to aspect 1, wherein a slit is formed in the metallic core element such that the slit extends from an upper side to a lower side of the metallic core element and runs through the mounting area.
5. The metallic core element according to aspect 4, wherein the slit ends into an installation opening formed in the mounting area for receiving at least one electric connector for establishing an electrical connection to the chip module.
6. The metallic core element according to aspect 5, wherein the slit extends through the mounting area on two sides of the installation opening.
7. The metallic core element according to aspect 5, wherein at least in a region of the ablation zone, the slit extends essentially in parallel to a longitudinal direction of the metallic core element.
8. The metallic core element according to aspect 7, wherein at least sectionwise, the ablation zone is distanced from the slit.
9. The metallic core element according to aspect 4, wherein the slit has an outer end section ending at an outer edge of the metallic core element and extending essentially perpendicular to the outer edge.
10. The metallic core element according to aspect 9, wherein a first curve section of the slit connects to the outer end section and has a first curvature radius.
11. The metallic core element according to aspect 9, wherein a second curve section of the slit has a second curvature radius bigger than the first curvature radius.
12. The metallic core element according to aspect 11, wherein a middle section of the slit extends between the first curve section and the second curve section.
13. The metallic core element according to aspect 12, wherein the middle section extends essentially in parallel to the outer edge of the metallic core element.
14. A chip card body for a chip card, in particular a transaction card having a chip module enabling electronic transactions, comprising
   a flat metallic core element having a mounting area for mounting the chip module to the metallic core element, and
   at least one plastic layer at least partially covering the metallic core element and having a receiving opening providing access to the mounting area and configured for receiving the chip module;
   wherein the mounting area is at least partly provided with an ablation zone providing a surface roughening for improving a bond between the mounting area and the chip module when the chip module is mounted to the metallic core element; and
   wherein the receiving opening surrounds the ablation zone.
15. The card body according to aspect 14, wherein the receiving opening has at least one rounded corner section with a corner radius which is smaller than a radius of an installation opening of the metallic core element, preferably less than 2.25 mm.
16. The card body according to aspect 15, wherein at least in the region of the rounded corner section, a distance between the ablation zone and an inner perimeter of the receiving opening is provided.
17. The card body according to aspect 14, wherein a chip module is received in the receiving opening and mounted to the mounting area by at least being bonded to the ablation zone.
18. The card body according to aspect 14, wherein the chip module is glued at least to the ablation zone.
19. A method for manufacturing a chip card, in particular a transaction card having a chip module enabling electronic transactions, comprising the steps of:
   providing a flat a metallic core element having a mounting area for mounting the chip module to the metallic core element;
   covering the metallic core element at least partly with at least one plastic layer having a receiving opening configured for receiving the chip module and surrounding the mounting area; and
   bonding the chip module to an ablation zone providing a surface roughening in the mounting area for improving a bond between the mounting area and the chip module when the chip module is mounted to the metallic core element.
20. The method according to aspect 19, further comprising the step of forming the ablation zone through the receiving opening, preferably by means of laser ablation.

## Claims

1. Flat metallic core element (22) for a card body (2) of a chip card (1), in particular a transaction card having a chip module (3) enabling electronic transactions,
the metallic core element (22) having a mounting area (20) for mounting the chip module (3) to the metallic core element,
wherein the mounting area (20) is at least partly provided with an ablation zone (25) providing a surface roughening for improving a bond between the mounting area (20) and the chip module (3) when the chip module (3) is mounted to the metallic core element (22).

2. Metallic core element (22) according to claim 1, wherein the surface roughening is provided as a ribbing (26).

3. Metallic core element (22) according to claim 2, wherein the ribbing (26) extends essentially diagonally with respect to a transverse direction (Y) of the metallic core element (22).

4. Metallic core element (22) according to at least one of claims 1 to 3, wherein a slit (10) is formed in the metallic core element (22) such that the slit (10) extends from an upper side to a lower side of the metallic core element (22) and runs through the mounting area (20).

5. Metallic core element (22) according to claim 4, wherein the slit (10) ends into an installation opening (8) formed in the mounting area (20) for receiving at least one electric connector (34) for establishing an electrical connection to the chip module (3), and/or wherein the slit (10) extends through the mounting area (20) on two sides of the installation opening (8).

6. Metallic core element (22) according to claim 4 or 5, wherein at least in a region of the ablation zone (25), the slit (10) extends essentially in parallel to a longitudinal direction (X) of the metallic core element (22), and/or wherein at least sectionwise, the ablation zone (25) is distanced from the slit (10).

7. Metallic core element (22) according to at least one of claims 4 to 6, wherein the slit (10) has an outer end section (14) ending at an outer edge of the metallic core element (22) and is extending essentially perpendicular to the outer edge.

8. Metallic core element (22) according to claim 7, wherein a first curve section (11) of the slit (10) connects to the outer end section (14) and has a first curvature radius.

9. Metallic core element (22) according to claim 8, wherein a second curve section (12) of the slit (10) has a second curvature radius bigger than the first curvature radius.

10. Metallic core element (22) according to claim 9, wherein a middle section (13) of the slit (10) extends between the first curve section (11) and the second curve section (12), and/or essentially in parallel to the outer edge of the metallic core element (22).

11. Card body (2) for a chip card (1), in particular a transaction card having a chip module (3) enabling electronic transactions, comprising
a flat metallic core element (22) having a mounting area (20) for mounting the chip module (3) to the metallic core element (22), and
at least one plastic layer at least partially covering the metallic core element (22) and having a receiving opening (7) providing access to the mounting area (20) and configured for receiving the chip module (3);
wherein the mounting area (20) is at least partly provided with an ablation zone (25) providing a surface roughening for improving a bond between the mounting area (20) and the chip module (3) when the chip module (3) is mounted to the metallic core element (22); and
wherein the receiving opening (7) surrounds the ablation zone (25).

12. Card body (2) according to claim 11, wherein the receiving opening (7) has at least one rounded corner section with a corner radius which is smaller than a radius of an installation opening (8) of the metallic core element (22), preferably less than 2.25, and/or wherein at least in the region of the rounded corner section, a distance between the ablation zone (25) and an inner perimeter of the receiving opening (7) is provided.

13. Card body (2) according to claim 11 or 12, wherein a chip module (3) is received in the receiving opening (7) and mounted to the mounting area (20) by at least being bonded and/or glued at least to the ablation zone (25).

14. Method for manufacturing a chip card (1), in particular a transaction card having a chip module (3) enabling electronic transactions, comprising the steps of:
providing a flat a metallic core element (22) having a mounting area (20) for mounting the chip module (3) to the metallic core element (22);
covering the metallic core element (22) at least partly with at least one plastic layer having a receiving opening (7) configured for receiving the chip module (3) and surrounding the mounting area (20); and
bonding the chip module (3) to an ablation zone (25) providing a surface roughening in the mounting area (20) for improving a bond between the mounting area (20) and the chip module (3) when the chip module (3) is mounted to the metallic core element (22).

15. The method according to claim 14, further comprising the step of forming the ablation zone (25) through the receiving opening (7), preferably by means of laser ablation.
